# EUROPÄISCHE PATENTSCHRIFT

(11) **EP 1 293 818 B1**
(45) Veröffentlichungstag und Bekanntmachung des Hinweises auf die Patenterteilung: **22.04.2015**
(21) Anmeldenummer: 02102208.2
(22) Anmeldetag: 22.08.2002
(51) Int. Cl.: G02B 21/08

(54) **Mikroskop mit einer Beleuchtungseinspiegelung**
Microscope with a reflective lighting
Microscope avec un éclairage en réflexion

(30) Priorität: 07.09.2001 DE 10144062
(43) Veröffentlichungstag der Anmeldung: 19.03.2003
(73) Patentinhaber: Leica Instruments (Singapore) Pte. Ltd., 608924 Singapore (SG)
(72) Erfinder: Sander, Dr. Ulrich, 9445, Rebstein (CH)
(74) Vertreter: m patent group

(56) Entgegenhaltungen:
- US-A- 2 850 944
- US-B1- 6 239 904
- PATENT ABSTRACTS OF JAPAN Bd. 1999, Nr. 09, 30. Juli 1999 (1999-07-30) -& JP 11 109254 A (OLYMPUS OPTICAL CO LTD), 23. April 1999 (1999-04-23)
- PATENT ABSTRACTS OF JAPAN Bd. 1998, Nr. 10, 31. August 1998 (1998-08-31) -& JP 10 133122 A (NIKON CORP), 22. Mai 1998 (1998-05-22)
- PATENT ABSTRACTS OF JAPAN Bd. 1999, Nr. 05, 31. Mai 1999 (1999-05-31) -& JP 11 038327 A (NIKON CORP), 12. Februar 1999 (1999-02-12)

## Beschreibung

Die Erfindung betrifft ein (Stereo-)Operationsmikroskop mit einer Beleuchtungseinspiegelung, durch die ein Beleuchtungsstrahlengang über einen Umlenkspiegel in den Hauptstrahlengang des Mikroskops eingeblendet wird.

Eingespiegelte Strahlengänge zur Beleuchtung eines Objektfeldes werden bei verschiedensten Anwendungen, insbesondere auch im Medizinalbereich, eingesetzt. Dabei wird üblicherweise der Beleuchtungsstrahlengang über einen Umlenkspiegel oder ein Umlenkprisma, die in der Regel in der Achse des Hauptstrahlenganges des Mikroskops angebracht sind, in den Hauptstrahlengang des Mikroskops eingespiegelt. Dies führt zu einer Beleuchtung der Objektfläche direkt in der Achse des Hauptstrahlenganges eines Mikroskops. Wird die Beleuchtung seitlich der Achse des Hauptstrahlenganges angebracht, führt dies meistens zu einer unerwünschten Schattenbildung.

Bei verschiedenen Anwendungen wird aber eine von der Beobachtungsachse abweichende Beleuchtungseinstrahlung gewünscht. Aus der DE-A-40 28 605 bzw. der DE-A-197 28 035 sind Lösungen bekannt, die einen zweiten Spiegel aufweisen. Vor allem für Augenoperationen wird eine sogenannte "0-Grad"- Beleuchtung - "0-Grad" steht für eine Beleuchtung in der Achse des Hauptstrahlenganges - um einen kleinen Winkel von z.B. 6 Grad ergänzt, um die Sichtbarkeit des Operationsfeldes zu verbessern.

Eine andere Ausgestaltung einer bekannten Beleuchtungseinspiegelung - vgl. die DE-A-196 50 773 - ist dadurch gekennzeichnet, dass das Licht direkt in die Verbindungslinie der Beobachtungsstrahlengänge eingeleitet wird.

Um partielle Abdunkelungen des Objektfeldes zu erreichen, werden im Beleuchtungsstrahlengang bei Bedarf Blenden eingesetzt, wie aus der US 4,715,877 ersichtlich. Diese befinden sich aber im zum Objektfeld konjugierten Ort der Beleuchtung. Solche Blenden können beispielsweise zur Reduktion des sogenannten "Rot-Reflexes" - wiederum bei Augenoperationen - eingesetzt werden. Andere Blenden dienen der absichtlich Gewebe schonenden Ausschaltung des über den jeweiligen Spiegel gelenkten Lichts.

Der Erfinder erkannte, dass die bekannten Systeme nachteilig sind in Bezug auf die folgenden Punkte:
a) Es ist derzeit keine kontinuierliche Anpassung der Beleuchtungswinkel in radialer und axialer Richtung gegenüber dem Hauptstrahlengang des Mikroskops möglich.
b) Die schräge Beleuchtung über zwei Spiegel ermöglicht nur vorgegebene Beleuchtungswinkel in radialer Richtung gegenüber dem Hauptstrahlengang des Mikroskops, woraus sich eine Einschränkung in der Kontrastwahl ergibt.
c) Die Einspiegelung in die Beobachtungsstrahlengänge ist geeignet für eine Beleuchtung in engen Kanälen, führt aber einerseits zu Kontrastarmut und andererseits zu konstruktiv schwierigen Lösungen.
d) Die Anordnung gemäß DE-A-36 23 613 führt durch die Beleuchtungs-Einspiegelung im konvergenten Strahlengang zu Lichtverlust und Doppelbildern.

Die JP 11 109254 A vom 23.04.1999 beschreibt ein Mikroskop mit einer Beleuchtungseinrichtung, die Beleuchtungslicht über einen teildurchlässigen Spiegel in die Objektebene bzw. auf das Objekt lenkt. Zwischen dem teildurchlässigen Spiegel und der Lichtquelle ist eine Blendenscheibe drehbar angeordnet. Diese Scheibe weist unterschiedlich ausgebildete Blenden auf. Durch Drehung der Blendenscheibe können so verschiedene Blendenarten bzw. Blendenformen in Wirkstellung gebracht werden. Es ist in dieser Schrift nur vorgesehen, dass die verschiedenen Blenden jeweils in eine definierte Position gebracht werden. Außerdem gibt es keinen Hinweis auf die Erzeugung von kontinuierlich veränderbaren Beleuchtungswinkeln auf dem Objekt.

Die US 5,270,747 A1 offenbart ein Mikroskop gemäß Oberbegriff des Anspruchs 1, bei dem der Beleuchtungsstrahlengang über einen Spiegel oder über einen Halbspiegel über das Hauptobjektiv auf das Objekt gelenkt wird. Kommt der Halbspiegel zum Einsatz, so zeigt dieser zwei kreisförmige Bereiche für den ersten und zweiten Beobachtungsstrahlengang. Der Beleuchtungsstrahlengang wird außerhalb dieser Bereiche in einem Bereich Ha geführt.

Die JP-A-08122649 offenbart eine vertikale Beleuchtungseinrichtung für ein Mikroskop, mit der feine Unebenheiten auf der Oberfläche eines Objekts besser erkannt werden können. Hierzu schlägt diese Schrift eine in einer Bewegungseinheit untergebrachte Aperturblende vor, die mittels der Bewegungseinheit senkrecht zur Achse eines Beleuchtungsstrahlengangs bewegt werden kann. Durch diese Bewegung der Aperturblende wird das in der hinteren Objektivpupille erzeugte Beleuchtungsquellenbild leicht aus der Hauptsache des Objektivs herausgeschoben.

Schließlich ist aus der EP 1 008 884 A1 eine Durchlichtbeleuchtungseinrichtung für Mikroskope bekannt. In dieser Einrichtung sind zwei Abschattungs- bzw. Abblendelemente an einer zur Objektivpupille konjugierten Position angeordnet, die dazu eingesetzt werden, die Form der Öffnung in der Objektivpupille zu variieren. Die dort vorgeschlagene Einrichtung dient zur Kontrastvariation und Kontrast-Optimierung.

Der Erfindung liegt somit primär die Aufgabe zu Grunde, eine Beleuchtungsvorrichtung zu schaffen, die es ermöglicht, die Lichtstrahlen in variierbaren Winkeln auf das Objektfeld auftreffen zu lassen und damit die oben genannten Nachteile zu vermeiden.

Gelöst wird diese Aufgabe durch ein Mikroskop gemäß Anspruch 1, speziell durch folgende Maßnahmen:
- Der Beleuchtungsstrahlengang wird über einen Umlenkspiegel, welcher im Durchmesser den Abstand der Beobachtungsstrahlengänge übersteigt und freie Öffnungen für die Beobachtungsstrahlengänge hat, in den Hauptstrahlengang des Mikroskops eingeblendet.
- Über eine radial um die Achse des Beleuchtungsstrahlengangs verstellbare Blende werden beliebige Auftreffwinkel der das Objekt beleuchtenden Lichtstrahlen erreicht.
- Vorzugsweise durch Verschieben der Linsenelemente der Beleuchtungsoptik im Beleuchtungsstrahlengang wird das ausgeleuchtete Objektfeld groß mit kleiner Beleuchtungspupille oder klein mit großer Beleuchtungspupille ausgebildet.
- Bei Bedarf werden diese Blenden einsetz- und herausnehmbar, beispielsweise ein- und ausklappbar, ausgebildet.
- Vorzugsweise durch Verschieben der gesamten Beleuchtungsoptik - also der Beleuchtungspupille über das Umlenkelement - werden die Beleuchtungswinkel ebenfalls verändert.

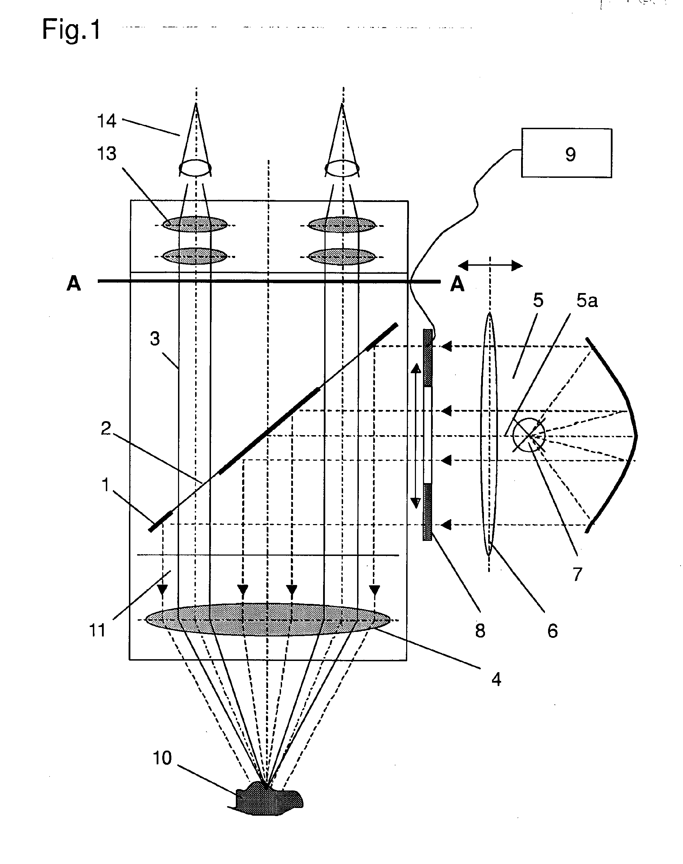

Gemäß einer besonderen Ausgestaltung dieser Blenden ist diese als Diaphragma, dünne Schicht, LCD oder als elektrochrome Schicht ausbildbar. Vorzugsweise kommt eine Beleuchtungseinspiegelungs-Kombination, wie sie in Fig. 1 dargestellt ist, in medizinischen Anwendungen zum Einsatz.

Die Situation wird damit durch die Erfindung dahingehend verbessert, dass
- durch die erfindungsgemäße Einspiegelung des Beleuchtungsstrahlengangs über einen Umlenkspiegel, welcher im Durchmesser den Abstand der Beobachtungsstrahlengänge übersteigt, und den erfindungsgemäßen Einsatz einer radial im Beleuchtungsstrahlengang verschiebbaren Blende die Auftreffwinkel der das Objekt beleuchtenden Lichtstrahlen in radialer Richtung - bezogen auf den Hauptstrahlengang des Mikroskops - verändert werden; und dass
- durch den Einsatz von Blenden im Beleuchtungsstrahlengang gemeinsam mit der Beleuchtungsoptik weitere Varianten zur Veränderung der Objektfeld-Ausleuchtung erreicht werden, um beispielsweise den Kontrast zu erhöhen und partiell das Objektfeld abzudunkeln.

Im obigen Text wird zwar auf ein Operationsmikroskop Bezug genommen; die Erfindung ist jedoch nicht darauf eingeschränkt, sie ist vielmehr auch bei optischen Geräten mit Zusatz-Beleuchtungen - z.B. Video- und Foto-Kameras, Mikroskope zur Untersuchung von Leiterplatten etc. - einsetzbar.

An Hand von schematischen Darstellungen wird die Erfindung beispielhaft näher erläutert. Es zeigen dabei:
- Fig. 1:: einen Mikroskop-Aufbau mit dem Einsatz eines erfindungsgemäßen Umlenkelements;
- Fig. 2a:: eine Draufsicht des in Fig.1 dargestellten Umlenkelementes im Hauptstrahlengang eines Stereo-Operationsmikroskops;
- Fig. 2b:: eine Beleuchtungs-Einspiegelung in den Beobachtungsstrahlengang eines Operations-Mikroskops;
- Fig. 3a-c:: die Funktionsweise der Einspiegelung im ausgeschnittenen und vergrößerten Detail;
- Fig. 4a,b:: eine Blende zur partiellen Lichtreduktion des Beleuchtungsstrahlengangs.

Die Figuren werden zusammenhängend und übergreifend beschrieben. Gleiche Bezugszeichen bedeuten gleiche Bauteile, Bezugszeichen mit unterschiedlichen Indizes geben funktionsgleiche Bauteile an.

Die Fig. 1 zeigt einen Mikroskopaufbau mit einer Beleuchtungs-Einspiegelung in den Hauptstrahlengang eines Stereo-Mikroskops, einem Umlenkelement 1, welches im Durchmesser den Abstand der beiden Beobachtungsstrahlengänge 3a, 3b übersteigt, einem Hauptobjektiv 4, einem Zoom 11, einem Beleuchtungsstrahlengang 5, einer Beleuchtungsoptik 6, einer Lichtquelle 7, einer in radialer Richtung verschiebbaren Blende 8 mit optionaler elektronischer Ansteuerung 9 sowie einem Objekt 10. Zusätzlich wird die Anordnung der Okulare 13 und des Beobachters 14 dargestellt.

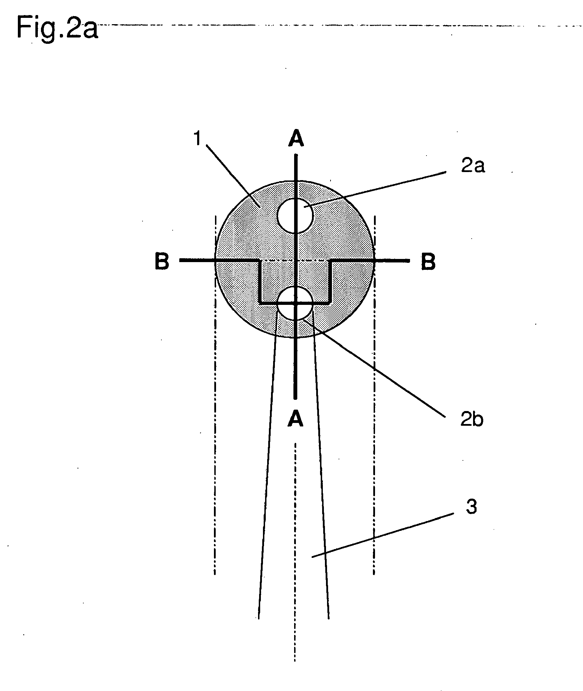

Die Fig. 2a zeigt in Draufsicht das in Fig.1 dargestellte Umlenkelement 1 im Hauptstrahlengang eines Mikroskops mit zwei Öffnungen 2a, 2b für die Beobachtungsstrahlengänge 3. Der Schnitt A-A durch die beiden Öffnungen für die Beobachterstrahlengänge 2a, 2b im Umlenkelement 1 wird in der Fig. 1 schematisch dargestellt. Der Schnitt B-B, in Fig. 2a dargestellt, zeigt die Seitenansicht des Umlenkelementes rechtwinklig zum Schnitt A - A.

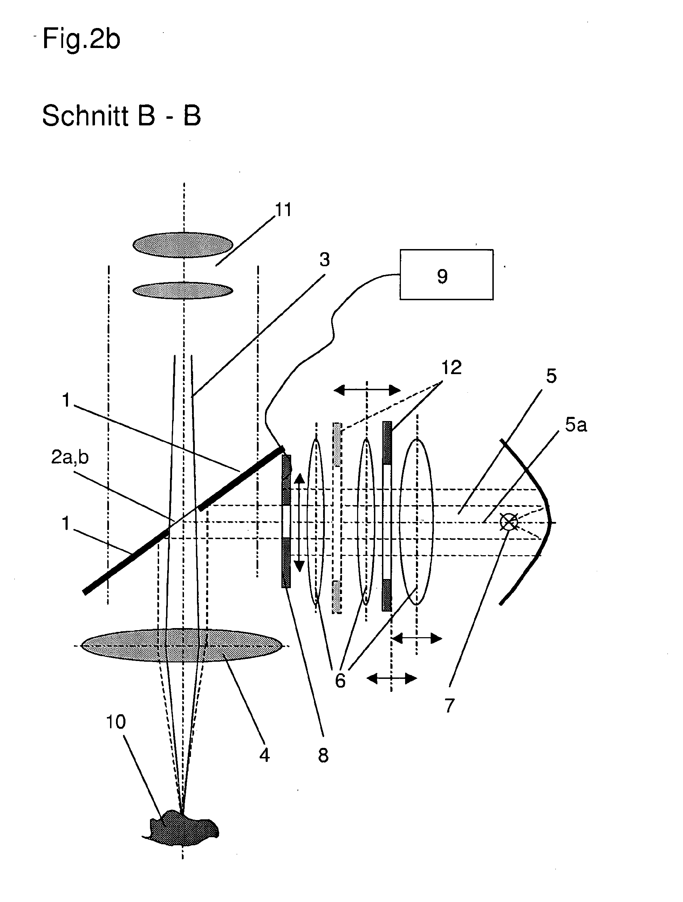

Die Fig. 2b zeigt analog zu Fig. 1 eine Beleuchtungs-Einspiegelung in den Beobachtungsstrahlengang 3 eines Mikroskops mit einem Umlenkelement 1, einem Hauptobjektiv 4, einem Zoom 11, einem Beleuchtungsstrahlengang 5 mit Achse 5a, einer axial verstellbaren Beleuchtungsoptik 6, einer radial und axial verstellbaren Blende 12 im Beleuchtungsstrahlengang 5, einer beliebigen Lichtquelle 7, einer in radialer Richtung verschiebbaren Blende 8 mit optionaler elektronischer Ansteuerung 9 ohne Darstellung eines an sich bekannten Antriebs sowie einem Objekt 10.

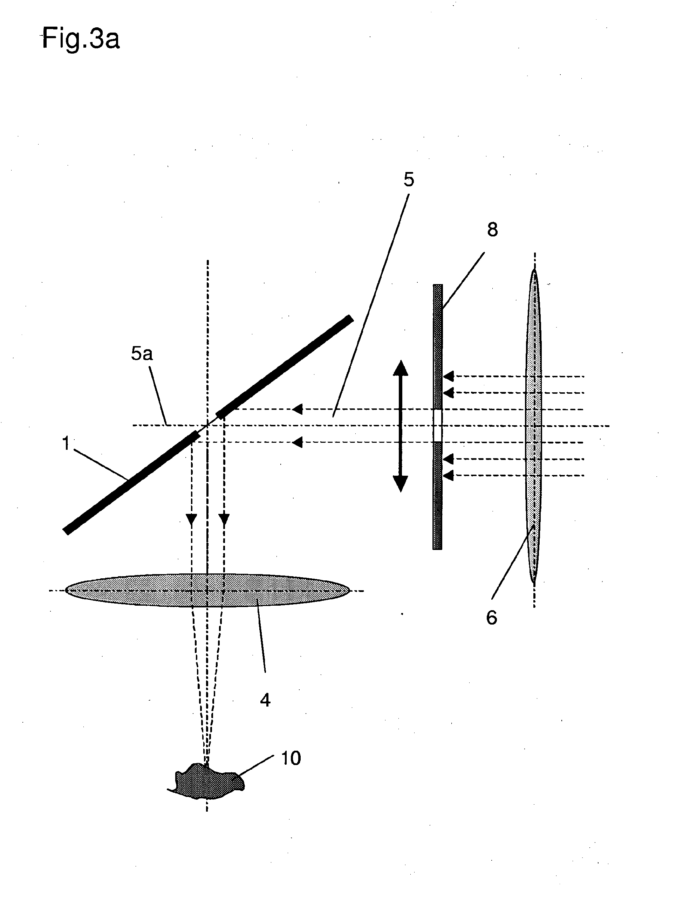

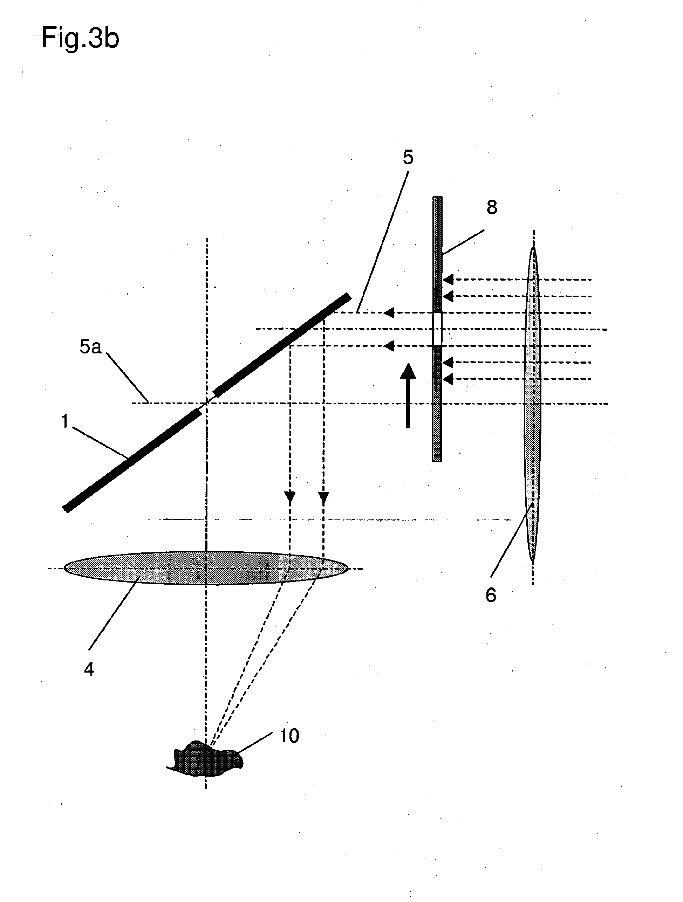

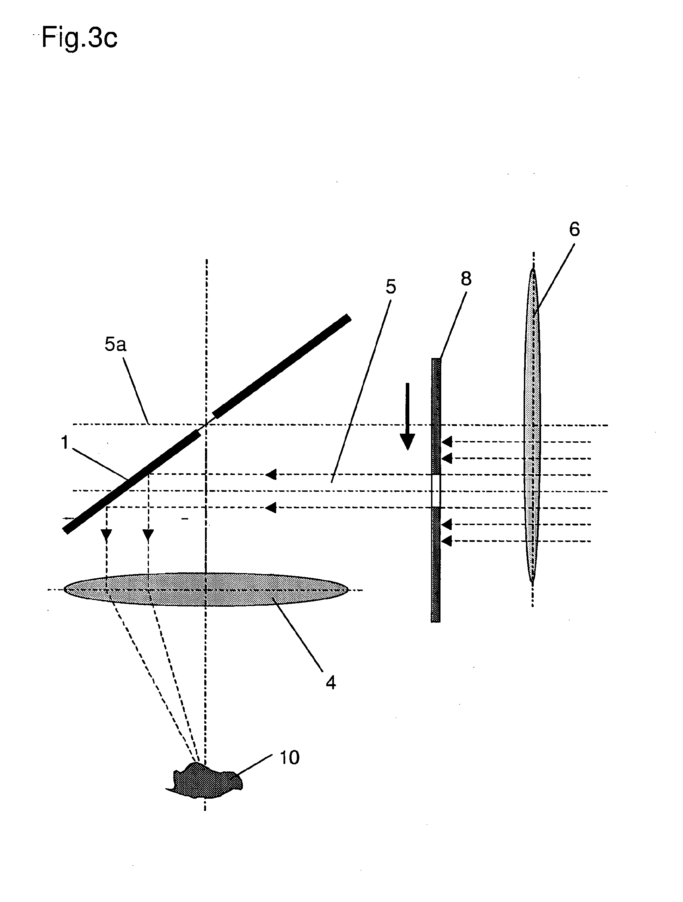

Die Fig. 3a - c zeigen im Detail die Funktionsweise der Beleuchtungs-Einspiegelung mit dem Umlenkelement 1, dem Hauptobjektiv 4, der Achse 5a des Beleuchtungsstrahlenganges 5, der Blende 8 sowie der Beleuchtungs-Optik 6. Fig. 3a zeigt die Blende 8 im zur Achse 5a des Beleuchtungsstrahlengangs 5 zentrierten Zustand. Die Fig. 3b und 3c zeigen dezentrierte Blendenpositionen, wobei in Fig. 3b die Blende 8 nach oben und in Fig. 3c nach unten verschoben ist.

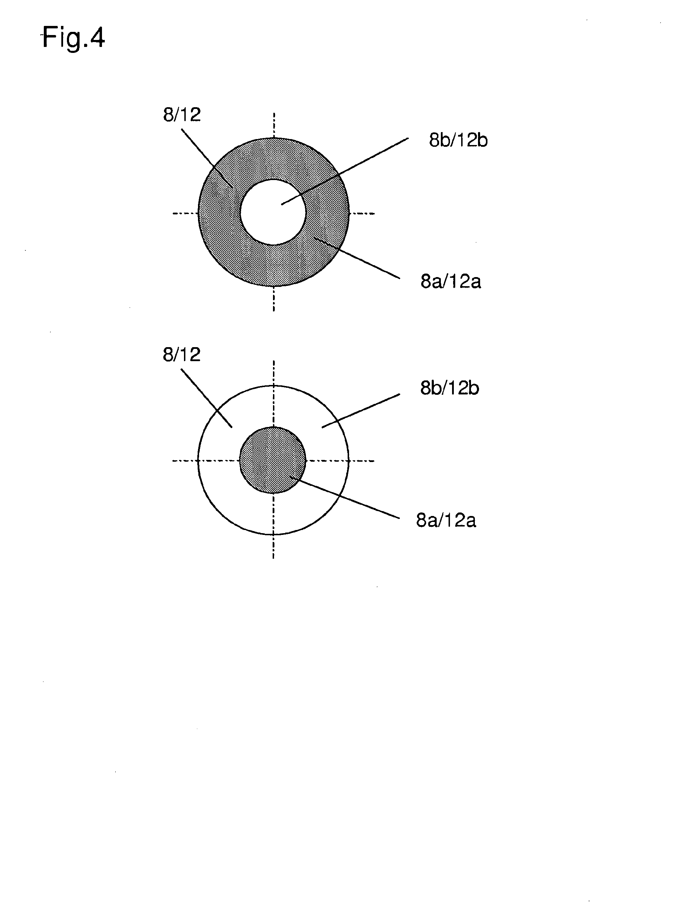

Die Fig. 4a und Fig. 4b zeigen typische Ausgestaltungen der Blenden 8 bzw. 12 mit lichtintensitätsreduzierten Bereichen 8a, 12a bzw. nicht lichtintensitätsreduzierten Bereichen 8b, 12b, wobei die Form der Blenden 8, 12 eine beliebige - insbesondere auch nicht rotationssymmetrische - sein kann.

Nachfolgend wird die Funktionsweise der erfindungsgemäßen Vorrichtung erläutert. Für bestimmte Anwendungen - insbesondere beim Einsatz von Mikroskopen im Medizinalbereich - wird zur Objektfeld-Beleuchtung ein Beleuchtungsstrahlengang 5 eingespiegelt. Beim erfindungsgemäßen Einsatz eines Umlenkelements 1, beispielsweise eines Spiegels oder Umlenkprismas mit zwei Öffnungen 2a, 2b für die Beobachtungsstrahlengänge 3 gemäß den Fig. 1 bzw. 2a, wird der von der Lichtquelle 7 ausgehende Beleuchtungsstrahlengang 5 in den Hauptstrahlengang des Mikroskops eingeblendet. Dabei ist das Umlenkelement 1 so ausgebildet, dass es im Durchmesser den Abstand der beiden Beobachtungsstrahlengänge 3 übersteigt und für jeden Strahlengang Öffnungen aufweist, die wahlweise durch ein teilreflektierendes Element verschlossen sein können.

Durch den Einsatz einer radial zur Achse 5a des Beleuchtungsstrahlenganges 5 verschiebbaren Blende 8 wird erreicht, dass das Objekt 10 unter verschiedenen Winkeln beleuchtet werden kann.

Wird eine Blende 8 - vgl. Fig. 4b - mit zentral lichtintensitätsreduziertem Bereich, beispielsweise ein Grau- oder Spektralfilter oder etwa ein LCD eingesetzt, lässt sich eine Rundum-Beleuchtung (Ringbeleuchtung) des Objekts 10 ohne Schattenbildung erreichen. Mittels Blenden, welche nicht rotationssymmetrisch aufgebaut sind, lassen sich spezielle Beleuchtungsprofile erstellen. Durch das Verschieben der Beleuchtungsoptik 6 in axialer Richtung lassen sich große Objektfelder mit kleiner Beleuchtungspupille oder kleine Objektfelder mit großer Beleuchtungspupille ausbilden. An Stelle der Blende 8 kann auch ein Drehkeilpaar zur Verschiebung des Beleuchtungsstrahlenganges eingesetzt werden, um die Achse des Beleuchtungsstrahlenganges zu verschieben.

Weiterhin ist es möglich und eine Art der erfindungsgemäßen Ausgestaltung, dass die gesamte Beleuchtungsoptik mit der Achse 5a parallel zur zentrierten Lage verschoben wird. Damit bleibt - auch in verschobenem Zustand - die gesamte Beleuchtungspupille mit der entsprechenden Lichtintensität wirksam; wohingegen ein Schieben der Blende 8 eine Reduzierung der Beleuchtungspupille - also eine Intensitätsreduzierung - bedeutet.

### Bezugszeichenliste

- 1: Umlenkelement
- 2; 2a,b: Öffnungen für Beobachtungsstrahlengang/-strahlengänge
- 3a,b: Beobachtungsstrahlengänge
- 4: Hauptobjektiv
- 5: Beleuchtungsstrahlengang
- 5a: Achse von (5)
- 6: Beleuchtungsoptik
- 7: Lichtquelle
- 8: Blende
- 8a,b: lichtintensitätsreduzierter / nicht lichtintensitätsreduzierter Bereich
- 9: elektronische Blenden-Ansteuerung
- 10: Objekt
- 11: Zoom
- 12: Blende
- 12a,b: lichtintensitätsreduzierter / nicht lichtintensitätsreduzierter Bereich
- 13: Okular(e)
- 14: Beobachter

- A: Schnitt A-A
- B: Schnitt B-B

## Patentansprüche

1. Mikroskop mit einem Hauptstrahlengang und mit zwei Beobachtungsstrahlengänge (3a, 3b), einem Hauptobjektiv (4) zur Beobachtung eines Objektes (10), einem Beleuchtungsstrahlengang (5) mit einer Beleuchtungsachse (5a), mit einer Beleuchtungsvorrichtung, die eine Lichtquelle (7), eine Beleuchtungsoptik (6) zur Beleuchtung des Objektes (10) und eine Blende (8) aufweist, und mit einem im Hauptstrahlengang angeordneten und mit einer Verspiegelung ausgebildeten Umlenkelement (1), welches im Durchmesser den Abstand der beiden Beobachtungsstrahlengänge (3a, 3b) übersteigt, und über welches das Licht der Lichtquelle (7) aus dem Beleuchtungsstrahlengang (5) über das Hauptobjektiv (4) auf das Objekt (10) gelenkt wird, wobei die Blende (8) zwischen der Lichtquelle (7) und dem Umlenkelement (1) angeordnet ist, **dadurch gekennzeichnet, dass** die Beobachtungsstrahlengänge (3a,3b) über zwei kreisförmige und außerhalb der Achse des Hauptstrahlengangs vorgesehenen freien Öffnungen (2a, 2b) im Umlenkelement (1) geführt werden und die Blende (8) radial zur Achse (5a) des Beleuchtungsstrahlengangs (5) derart verschiebbar angeordnet ist, dass der Beleuchtungsstrahlengang (5) zum Hauptstrahlengang verschoben wird und so verschiedene Beleuchtungswinkel einstellbar sind, und dass die Blende (8) im Beleuchtungsstrahlengang (5) zusätzlich axial verschiebbar und drehbar um die Achse (5a) des Beleuchtungsstrahlenganges (5) ausgebildet ist.

2. Mikroskop nach Anspruch 1, **dadurch gekennzeichnet, dass** das Umlenkelement (1) als Prisma oder Spiegel ausgebildet ist.

3. Mikroskop nach Anspruch 1, **dadurch gekennzeichnet, dass** die Blende (8) Teilbereiche des Beleuchtungsstrahlengangs (5) abdeckt und sich die Blende (5) vorzugsweise in der Nähe der Beleuchtungspupille befindet.

4. Mikroskop nach einem der vorhergehenden Ansprüche, **dadurch gekennzeichnet, dass** durch Verschieben der Linsenelemente der Beleuchtungsoptik (6) und/oder in Kombination mit einer Axialverschiebung der Blende (8) das ausgeleuchtete Objektfeld groß mit kleiner Beleuchtungspupille oder klein mit großer Beleuchtungspupille ausgebildet ist.

5. Mikroskop nach einem der vorhergehenden Ansprüche, **dadurch gekennzeichnet, dass** die Blende (8) einen lichtintensitätsreduzierten Bereich (8a) aufweist und dieser lichtwellenlängenabhängig durchlässig ausgebildet ist.

6. Mikroskop nach einem der vorhergehenden Ansprüche, **dadurch gekennzeichnet, dass** die räumliche Positionierung und/oder die Ein- und Ausblendbarkeit der Blende (8) elektronisch oder manuell ansteuerbar ist.

7. Mikroskop nach einem der vorhergehenden Ansprüche, **dadurch gekennzeichnet, dass** die Blende (8) als Diaphragma, dünne Schicht, LCD oder elektrochrome Schicht ausgebildet ist.

8. Mikroskop nach einem der vorhergehenden Ansprüche, **dadurch gekennzeichnet, dass** wenigstens eine der Öffnungen (2a, 2b) des Umlenkelements (1) für den Beobachtungsstrahlengänge (3a, 3b) mit teilreflektierenden Elementen verschließbar ausgebildet ist.

## Claims

1. Microscope having a main beam path and two observation beam paths (3a, 3b), a main objective (4) for observing an object (10), an illumination beam path (5) with an illumination axis (5a), with an illumination device which comprises a light source (7), an illuminating optical device (6) for illuminating the object (10) and a shutter (8), and having a deflector (1) the diameter of which exceeds the spacing of the two observation beam paths (3a, 3b), which is arranged in the main beam path and provided with a mirror finish, and by means of which the light from the light source (7) is deflected out of the illumination beam path (5) through the main objective (4) onto the object (10), the shutter (8) being arranged between the light source (7) and the deflector (1), **characterised in that** the observation beam paths (3a, 3b) are passed through two circular free apertures (2a, 2b) in the deflector (1) which are provided outside the axis of the main beam path and the shutter (8) is arranged to be movable radially with respect to the axis (5a) of the illumination beam path (5) such that the illumination beam path (5) is moved towards the main beam path and in this way different illumination angles can be selected, and **in that** the shutter (8) is additionally embodied to be axially movable in the illumination beam path (5) and rotatable about the axis (5a) of the illumination beam path (5).

2. Microscope according to claim 1, **characterised in that** the deflector (1) is embodied as a prism or mirror.

3. Microscope according to claim 1, **characterised in that** the shutter (8) covers partial areas of the illumination beam path (5) and the shutter (5) is preferably located close to the illumination pupil.

4. Microscope according to one of the preceding claims, **characterised in that** by moving the lens elements of the illuminating optical device (6) and/or in conjunction with an axial shift of the shutter (8), the illuminated object field is large with a small illumination pupil or small with a large illumination pupil.

5. Microscope according to one of the preceding claims, **characterised in that** the shutter (8) comprises an area (8a) of reduced light intensity and this area is embodied to be translucent depending on the light wavelength.

6. Microscope according to one of the preceding claims, **characterised in that** the spatial positioning and/or the fading in and out of the shutter (8) can be controlled electronically or manually.

7. Microscope according to one of the preceding claims, **characterised in that** the shutter (8) is embodied as a diaphragm, thin layer, LCD or electrochromic layer.

8. Microscope according to one of the preceding claims, **characterised in that** at least one of the openings (2a, 2b) of the deflector (1) for the observation beam paths (3a, 3b) is embodied to be closable with partially reflective elements.

## Revendications

1. Microscope ayant un trajet de faisceau principal et deux trajets de faisceau d'observation (3a, 3b), un objectif principal (4) pour observer un objet (10), un trajet de faisceau d'éclairage (5) avec un axe d'éclairage (5a), avec un dispositif d'éclairage qui comporte une source de lumière (7), un dispositif optique d'éclairage (6) pour éclairer l'objet (10) et un obturateur (8), et ayant un déflecteur (1) dont le diamètre dépasse l'espacement des deux trajets de faisceau d'observation (3a, 3b), lequel est disposé dans le trajet de faisceau principal et muni d'un fini miroir, et par l'intermédiaire duquel la lumière en provenance de la source de lumière (7) est déviée hors du trajet de faisceau d'éclairage (5) à travers l'objectif principal (4) sur l'objet (10), l'obturateur (8) étant disposé entre la source de lumière (7) et le déflecteur (1), **caractérisé en ce que** les trajets de faisceau d'observation (3a, 3b) traversent deux ouvertures libres circulaires (2a, 2b) dans le déflecteur (1) lesquelles sont agencées à l'extérieur de l'axe du trajet de faisceau principal et l'obturateur (8) est disposé pour être mobile radialement par rapport à l'axe (5a) du trajet de faisceau d'éclairage (5) de sorte que le trajet de faisceau d'éclairage (5) est déplacé vers le trajet de faisceau principal et de cette manière différents angles d'éclairage peuvent être sélectionnés, et **en ce que** l'obturateur (8) est mis en oeuvre en outre pour être mobile axialement dans le trajet de faisceau d'éclairage (5) et pouvant tourner autour de l'axe (5a) du trajet de faisceau d'éclairage (5).

2. Microscope selon la revendication 1, **caractérisé en ce que** le déflecteur (1) est mis en oeuvre sous forme d'un prisme ou d'un miroir.

3. Microscope selon la revendication 1, **caractérisé en ce que** l'obturateur (8) recouvre des zones partielles du trajet de faisceau d'éclairage (5) et l'obturateur (5) est positionné de préférence à proximité de la pupille d'éclairage.

4. Microscope selon l'une quelconque des revendications précédentes, **caractérisé en ce que** en déplaçant les éléments de lentille du dispositif optique d'éclairage (6) et/ou en association avec un décalage axial de l'obturateur (8), le champ d'objet éclairé est grand avec une petite pupille d'éclairage ou petit avec une grande pupille d'éclairage.

5. Microscope selon l'une quelconque des revendications précédentes, **caractérisé en ce que** l'obturateur (8) comporte une zone (8a) d'intensité de lumière réduite et cette zone est mise en oeuvre pour être translucide en fonction de la longueur d'onde de lumière.

6. Microscope selon l'une quelconque des revendications précédentes, **caractérisé en ce que** le positionnement spatial et/ou l'augmentation et la réduction de l'obturateur (8) peuvent être commandés de manière électronique ou de manière manuelle.

7. Microscope selon l'une quelconque des revendications précédentes, **caractérisé en ce que** l'obturateur (8) est mis en forme en tant que diagramme, couche mince, LCD ou couche électrochromique.

8. Microscope selon l'une quelconque des revendications précédentes, **caractérisé en ce que** au moins l'une des ouvertures (2a, 2b) du déflecteur (1) pour les trajets de faisceau d'observation (3a, 3b) est mise en oeuvre pour être couverte avec d'éléments partiellement réfléchissants.
